# EUROPÄISCHE PATENTSCHRIFT

(11) **EP 2 086 911 B1**
(45) Veröffentlichungstag und Bekanntmachung des Hinweises auf die Patenterteilung: **09.03.2016**
(21) Anmeldenummer: 07818991.7
(22) Anmeldetag: 15.10.2007
(51) Int. Cl.: C04B 41/45, B27K 3/15

(54) **TRÄNKKONSERVIERUNG VON OBJEKTEN**
PRESERVATION OF OBJECTS BY IMPREGNATION
CONSERVATION D'OBJETS PAR IMPRÉGNATION

(30) Priorität: 20.10.2006 DE 102006050413
(43) Veröffentlichungstag der Anmeldung: 12.08.2009
(73) Patentinhaber: Hermes Holding GmbH, 40699 Erkrath (DE)
(72) Erfinder: IBACH, Hermann, Wolf, 96110 Schesslitz (DE)
(74) Vertreter: Von Rohr Patentanwälte Partnerschaft mbB
(86) Internationale Anmeldenummer: PCT/EP2007/008920
(87) Internationale Veröffentlichungsnummer: WO 2008/046569

(56) Entgegenhaltungen:
- EP-A- 1 295 859

## Beschreibung

Die Erfindung betrifft ein Verfahren zum Konservieren von Objekten aus Stein oder Holz durch Ausfüllen der inneren Hohlräume des Objekts mit einer erhärtbaren Tränkflüssigkeit, wobei das Objekt während des Tränkens von einer Folie umhüllt ist, und wobei das Objekt getrocknet und dann allseitig mit einer Folie umschlossen wird, so dass ein Folienraum entsteht, und im unteren Bereich des mit der Folie umschlossenen Objekts eine die Folie durchstoßende insbesondere ein Ventil aufweisende Leitung befestigt wird, die zu einem mit der Tränkflüssigkeit gefüllten Behälter führt.

Es ist bekannt, ein zu konservierendes Objekt aus Stein in einem mit der Tränkflüssigkeit gefüllten Tränkbehälter zu stellen und durch abwechselnd ausgeübten Unterdruck und Überdruck für ein Eindringen der Tränkflüssigkeit und ein Ausgasen zu sorgen. Hierbei muss das zu tränkende Objekt während der Druckphase vollkommen mit der Tränkflüssigkeit umschlossen sein. Würde das nicht der Fall sein, würde an der nicht überdeckten Stelle das Druckmedium - in der Regel Luft - in das Objekt eindringen und die bereits eingedrungene Tränkflüssigkeit unkontrolliert aus dem Kapillarsystem herausdrücken. Die vollkommene Überdeckung der in den Tränkbehälter eingelegten Objekte mit Tränkflüssigkeit erfordert einen sehr hohen Materialeinsatz an Tränkflüssigkeit, von dem nur ein kleiner Teil in die Objekte eingebracht wird. Der Rest der Tränkflüssigkeit stellt für die einzelne Tränkung "Abfall" dar und muss entsorgt werden, wenn nicht durch eine entsprechende Lagerstabilität und Aufbereitung eine Wiederverwendung für weitere Tränkvorgänge möglich ist.

Aus der EP 1 295 859 A ist es bekannt, zum Konservieren von Gegenständen diese mit einer Folie zu umhüllen und an die Folie einen Tränkflüssigkeitskreislauf anzuschließen, wobei im Kreislauf zwei Behälter, eine Pumpe und mehrere Ventile angeordnet sind.

Aufgabe der Erfindung ist es, bei einem Verfahren der eingangs genannten Art den Bedarf an Tränkflüssigkeit so zu reduzieren, dass das Verhältnis Mitteleinsatz zu tatsächlichem Tränkrnitteibedarf in einer wirtschaftlich vertretbaren und umweltverträglichen Größenordnung liegt und ein Verfahren zu schaffen, das einfach und insbesondere vor Ort an einem Objekt durchführbar ist.

Diese Aufgabe wird erfindungsgemäß dadurch gelöst, dass:
- oberhalb des Objektes vor oder nach der Folienumschließung ein Füllstandsbehälter angeordnet wird, an dem oberhalb eine Saugleitung angeordnet ist, die zu dem Saugstutzen einer Pumpe führt,
- über die Saugleitung wird Unterdruck in dem Folienraum erzeugt
- über eine Anschlussleitung im unteren Bereich des Follenraumes wird in mehreren Stufen das zur Konservierung vorgesehene Tränkungsmittel in den Folienraum eingelassen, und
- nach dem vollständigen Tränken des Objekts werden die Folie und der Füllstandbehälter vom Objekt entfernt, und die Tränkflüssigkeit wird im Objekt ausgehärtet.

Mit diesem erfindungsgemäßen Verfahren gelingt es, eine Vakuum-unterstützte Durchtränkung für solche poröse Stoffe zu erreichen, für die eine Vakuum-Drucktränkung im Vollbad nicht erforderlich ist. Eingesetzt werden können auch Mittel die durch Hydrolyse und Polykondensation ausreagieren und Mittel auf der Basis von Lösungsmitteln und Lacksystemen. So kann z.B. eine Kieselsäureester-Volltränkung erreicht werden, wie sie bisher bei der bekannten Kieselsäureester-Festigung nur - unkontrolliert - im oberflächennahen Bereich erzielt wurde. Es wird eine gleichmäßige, kontrollierte und alle Kapillaren erreichende Tränkung und Festigung erreicht, so dass das Risiko einer Schalenbildung nicht besteht.

Besonders vorteilhaft ist es, wenn der Füllstand durch Steuerung des Unterdrucks geregelt wird.

Da diese Kieselsäureester-Volltränkung bis in den Kern des Objektes reicht, ist es unproblematisch, durch Zugabe eines Silans eine bis in den Kern reichende Hydrophobierung durchzuführen, so dass eine Wasseraufnahme unterbunden wird. Bei einer durchgehenden Hydrophobierung ist das Risiko ausgeschaltet, das bei der nur die Oberfläche erreichenden Anwendung von Hydrophobierungsmitteln beachtet werden muss.

Besonders vorteilhaft ist es, dass das Verfahren vor Ort an einem Objekt durchgeführt werden kann, d. h. das Objekt kann an seinem Ort stehen bleiben und wird mit der Folie umhüllt. Damit können auch sehr große Objekte konserviert werden, wie zum Beispiel Statuen, Säulen und Obelisken.

Diese Volltränkung kommt auch für solche Tränkungsmittel infrage, die nicht durch Hydrolyse und Polykondensation reagieren, sondern als lösemittelhaltige Tränklösungen nur den physikalischen Prozess des Verdampfens des Lösungsmittels haben und dadurch der zwischen 5 und 35 % liegende Polymeranteil als in der Regel einen Film bildender Festkörpergehalt in den Kapillaren verbleibt (Lacksystem). Diese Lacksysteme (als Beispiel seien genannt Paraloid, Motema finish, Kieselsole) haben den Nachteil, dass sie aufgrund der sehr unterschiedlichen Teilchengrößen - die Lösungsmittel liegen im Bereich 0,5 bis 1 nm, die Feststoffgehalte der angesprochenen "Lacksysteme" bei 10 bis 1.000 nm - sich beim Eindringen in das Kapillarsystem entmischen. Dieses Entmischen, - Chromatographie-Effekt - schränkt den Einsatzbereich dieses Verfahrens auf solche porösen Stoffe ein, deren Porenhalsdurchmesser ausreichend groß ist.

Vorteilhafte Ausgestaltungen der Erfindung sind in den Unteransprüchen ausgeführt.

Ein Ausführungsbeispiel der Erfindung wird im Folgenden näher beschrieben.

An dem getrockneten und ggf. in der Feuchte vorkonditionierten Objekt wird am höchsten Punkt - bei einer stehenden Figur oberhalb des Kopfes - ein möglichst durchsichtiger Füllstandsbehälter angebracht, der im unteren Teil - vorzugsweise im Boden - durchlöchert ist. Das vorpräparierte Objekt wird dann in eine transparente Folie eingeschweißt. Über dem Behälter befindet sich ein Schlauchanschluss, der mit einer Vakuumpumpe verbunden ist. Diese Schlauchverbindung kann über ein Absperrventil geöffnet und verschlossen werden. Ein weiterer Schlauchanschluss befindet sich in der Folie am unteren Ende des Objekts. Dieser ist über ein Absperrventil mit dem Vorratsbehälter für die Tränkflüssigkeit verbunden.

Zunächst wird nur das Absperrventil vor der Vakuumpumpe geöffnet. Durch den entstehenden Unterdruck wird die Folie - physikalisch gesehen - aufgrund des außerhalb der Folie anstehenden Normaldrucks eng an das Tränkungsobjekt angedrückt.

In der Praxis würde man sagen, die Folie wird an das Tränkungsobjekt herangesogen. Bei laufender Vakuumpumpe wird das Absperrventil an dem Behälter mit der Tränkflüssigkeit so lange geöffnet, bis die durch den in dem "Folienexsikkator" bestehenden Unterdruck eingesogene Tränkflüssigkeit etwa ¼ der Gesamthöhe des zu tränkenden Objekts erreicht hat. Diesen Zustand hält man über mehrere Stunden aufrecht, damit die Tränkflüssigkeit in das untere Viertel des Objekts eindringen bzw. eingesogen werden kann. Unter Umständen ist es erforderlich, das Absperrventil mehrmals kurzzeitig zu öffnen, um weitere Tränkflüssigkeit anzubieten, damit der Pegel in etwa gehalten wird. Der Füllstand kann auch durch Steuerung des Unterdrucks geregelt sein.

Auf gleiche Art und Weise wird dann bis zur Hälfte des Objekts und dann bis Dreiviertel des Objekts vorgegangen. Danach empfiehlt es sich in kürzeren Schritten vorzugehen bis die Tränkflüssigkeit den Behälter, der das Eindringen des Tränkmediums in die Vakuumpumpe bzw. den Vakuumvorratsbehälter vermeiden soll, erreicht hat.

Ziel dieses schrittweisen Vorgehens ist es, die Oberfläche des zu tränkenden Objekts nicht sofort mit Tränkflüssigkeit vollständig zu benetzen, so dass die Luft leichter aus den zwar ausgetrockneten, aber mit Luft gefüllten Kapillaren abgesaugt werden kann.

Die Objekte können nunmehr zum Ausreagieren des eingebrachten Tränkmittels einem für die Reaktion erforderlichen Klima ausgesetzt werden.

Ein am "Folienexsikkator" angeordneter Füllstandssensor erleichtert die Arbeit und kann das Verfahren steuern. Mit dem Füllstandssensor und über eine Steuereinheit werden die Pumpen und das Ventil gesteuert.

## Patentansprüche

1. Verfahren zum Konservieren von Objekten aus Stein oder Holz durch Ausfüllen der inneren Hohlräume mit einer erhärtbaren Tränkflüssigkeit, wobei das Objekt während des Tränkens von einer Folie umhüllt ist, und wobei das Objekt getrocknet und dann allseitig mit einer Folie umschlossen wird, so dass ein Folienraum entsteht, und im unteren Bereich des mit der Folie umschlossenen Objekts eine die Folie durchstoßende insbesondere ein Ventil aufweisende Leitung befestigt wird, die zu einem mit der Tränkflüssigkeit gefüllten Behälter führt, **dadurch gekennzeichnet, dass**
- oberhalb des Objektes vor oder nach der Folienumschließung ein Füllstandsbehälter angeordnet wird, an dem oberhalb eine Saugleitung angeordnet ist, die zu dem Saugstutzen einer Pumpe führt,
- über die Saugleitung wird Unterdruck in dem Folienraum erzeugt
- über eine Anschlussleitung im unteren Bereich des Folienraumes wird in mehreren Stufen das zur Konservierung vorgesehene Tränkungsmittel in den Folienraum eingelassen, und
- nach dem vollständigen Tränken des Objekts werden die Folie und der Füllstandbehälter vom Objekt entfernt, und die Tränkflüssigkeit wird im Objekt ausgehärtet.

2. Verfahren nach Anspruch 1, **dadurch gekennzeichnet, dass** am Folienraum ein Füllstandssensor befestigt wird.

3. Verfahren nach einem der vorherigen Ansprüche, **dadurch gekennzeichnet, dass** der Füllstand durch Steuerung des Unterdrucks geregelt wird.

4. Verfahren nach einem der vorherigen Ansprüche, **dadurch gekennzeichnet, dass** der Folienraum stufenweise von unten nach oben mit Tränkflüssigkeit gefüllt wird.

5. Verfahren nach einem der vorherigen Ansprüche, **dadurch gekennzeichnet, dass** als Tränkflüssigkeit eine durch Hydrolyse und/oder Polykondensation reagierende Flüssigkeit insbesondere Kieselsäureester. verwendet wird.

6. Verfahren nach einem der vorherigen Ansprüche, **dadurch gekennzeichnet, dass** als Tränkflüssigkert ein Lösungsmittelsystem oder ein Lacksystem verwendet wird.

## Claims

1. A method of conserving objects made of stone or wood by filling the inner cavities with a settable impregnating fluid, wherein the object is enclosed by a film during impregnation and wherein the object is dried and then enclosed with a film on all sides, so that a film space is created and in the lower region of the object enclosed with the film, a line piercing the film, in particular a line exhibiting a valve, is secured, which line leads to a container filled with the impregnating fluid, **characterized in that**
- a level-controlled container is arranged above the object before or after the film enclosure, on which container a suction line is arranged at the top which leads to the suction connection of a pump,
- negative pressure is generated in the film space via the suction line
- the impregnating agent provided for conservation is admitted into the film space in several stages via a connection line in the lower region of the film space and
- after the complete impregnation of the object, the film and the level-controlled container are removed from the object and the impregnating fluid in the object is set.

2. The method according to claim 1, **characterized in that** a filling level sensor is secured to the film space.

3. The method according to one of the preceding claims, **characterized in that** the filling level is regulated by controlling the negative pressure.

4. The method according to one of the preceding claims, **characterized in that** the film space is gradually filled with impregnating fluid from the bottom upwards.

5. The method according to one of the preceding claims, **characterized in that** a fluid reacting by hydrolysis and/or polycondensation, in particular silicic acid ester, is used.

6. The method according to one of the preceding claims, **characterized in that** a solvent system or a paint system is used as the impregnating fluid.

## Revendications

1. Procédé destiné à la conservation d'objets en pierre ou en bois par remplissage des cavités intérieures avec un liquide d'imprégnation durcissable, lors duquel pendant l'imprégnation, l'objet est enveloppé d'un film et lors duquel on sèche l'objet et on l'entoure ensuite de toute part d'un film, de sorte à donner naissance à un espace filmé et dans la région inférieure de l'objet entouré du film, on fixe un conduit traversant le film, comportant notamment une valve qui mène vers un réservoir rempli du liquide d'imprégnation,
**caractérisé en ce que**
- au-dessus de l'objet, avant ou après l'entourage avec le film, on place un réservoir à niveau de remplissage, sur le dessus duquel est placé un conduit aspirant qui mène vers la tubulure d'aspiration d'une pompe,
- par l'intermédiaire du conduit aspirant, une dépression est créée dans l'espace filmé,
- par l'intermédiaire d'un conduit de raccordement dans la région inférieure de l'espace filmé, on fait entrer le produit d'imprégnation prévu pour la conservation en plusieurs étapes dans l'espace filmé et
- après l'imprégnation complète de l'objet, on retire le film et le réservoir à niveau de remplissage de l'objet et on fait durcir le liquide d'imprégnation dans l'objet.

2. Procédé selon la revendication 1, **caractérisé en ce qu'**on fixe un capteur de niveau de remplissage sur l'espace filmé.

3. Procédé selon l'une quelconque des revendications précédentes, **caractérisé en ce qu'**on règle le niveau de remplissage par contrôle de la dépression.

4. Procédé selon l'une quelconque des revendications précédentes, **caractérisé en ce qu'**on remplit par étapes l'espace filmé de liquide d'imprégnation, du bas vers le haut.

5. Procédé selon l'une quelconque des revendications précédentes, **caractérisé en ce qu'**en tant que liquide d'imprégnation, on utilise un liquide réagissant par hydrolyse et/ou par polycondensation, notamment un ester d'acide silique.

6. Procédé selon l'une quelconque des revendications précédentes, **caractérisé en ce qu'**en tant que liquide d'imprégnation, on utilise un système de solvant ou un système de vernis.
